# EUROPÄISCHE PATENTANMELDUNG

(11) **EP 4 663 431 A1**
(43) Veröffentlichungstag der Anmeldung: **17.12.2025**
(21) Anmeldenummer: 25174785.3
(22) Anmeldetag: 07.05.2025
(51) Int. Cl.: B60C 11/03

(54) **FAHRZEUGREIFEN**

(30) Priorität: 14.06.2024 DE 102024205529
(71) Anmelder: Continental Reifen Deutschland GmbH, 30175 Hannover (DE)
(72) Erfinder: Seng, Matthias, 30175 Hannover (DE); Brockmann, Jürgen, 30175 Hannover (DE)
(74) Vertreter: Continental Corporation

(57) **Zusammenfassung**

Fahrzeugreifen mit einem profilierten, laufrichtungsgebunden gestalteten Laufstreifen mit über die Laufstreifenbreite zueinander V-förmig verlaufenden ersten und zweiten Schrägrillen (1, 1') und mit breitenübergreifend verlaufenden Pitches, die jeweils aus einem ersten den ersten Schrägrillen (1) zugeordneten Pitchteil (P₁₁, P₂₂, P₃₃) und einem zweiten den zweiten Schrägrillen (1') zugeordneten Pitchteil (P₁₁, P₂₂, P₃₃) bestehen, wobei die Pitchteile (P₁₁, P₂₂, P₃₃) in mindestens zwei unterschiedlichen Umfangslängen vorgesehen sind.

Im Laufstreifen sind Kombinationspitches (A bis E) vorhanden, welche jeweils zumindest zwei in Umfangsrichtung aufeinander folgende Pitches enthalten, wobei sich jedes Pitch, über die Laufstreifenbreite betrachtet, aus einer Kombination aus einem ersten und einem zweiten Pitchteil (P₁₁, P₂₂, P₃₃) mit unterschiedlichen Umfangslängen zusammensetzt, wobei jedes Pitch Pitchteile (P₁₁, P₂₂, P₃₃) enthält, die sich entweder von der Kombination der Pitchteile (P₁₁, P₂₂, P₃₃) in jedem weiteren Pitch des Kombinationspitches (A bis E) unterscheiden oder derart angeordnet sind, dass in Umfangsrichtung aufeinanderfolgende Pitchteile (P₁₁, P₂₂, P₃₃) voneinander unterschiedlich sind.

## Beschreibung

Die Erfindung betrifft einen Fahrzeugreifen mit einem profilierten, laufrichtungsgebunden gestalteten Laufstreifen mit über die Laufstreifenbreite zueinander V-förmig verlaufenden ersten und zweiten Schrägrillen und mit Profilpositiven zwischen in Umfangsrichtung aufeinanderfolgenden ersten und zweiten Schrägrillen, welche jeweils mit den zwischen ihnen befindlichen Profilpositiven über die Laufstreifenbreite verlaufende Pitches bilden, die jeweils aus einem ersten den ersten Schrägrillen zugeordneten Pitchteil und einem zweiten den zweiten Schrägrillen zugeordneten Pitchteil bestehen, wobei die Pitchteile in mindestens zwei unterschiedlichen, an den seitlichen Rändern der Bodenaufstandsfläche des Laufstreifens vorliegenden Umfangslängen vorgesehen sind, und wobei die Pitches über den Umfang des Laufstreifen gemäß einer Pitchabfolge aufeinander folgen.

Ein derartiger Fahrzeugreifen ist beispielsweise aus der EP 1 431 077 B1 bekannt. V-förmig über die Laufstreifenbreite verlaufende Schrägrillen bilden gemeinsam mit den Profilpositiven zwischen den in Umfangsrichtung aufeinanderfolgenden Schrägrillen sogenannte Basispitches mit mindestens zwei verschiedenen Umfangslängen, die über den Reifenumfang gemäß einer Pitchabfolge geräuschoptimiert angeordnet sind. Die Basispitches sind in zumindest einem in Umfangsrichtung verlaufenden Laufstreifenbereich durch Querrillen zumindest in zwei unterschiedliche Typen von Profilpositivgruppen gegliedert, die in weitere Pitches geteilt sind. Zumindest ein Typ von Profilpositivgruppen weist zumindest ein Pitch mehr auf, als der oder ein anderer Typ von Profilpositivgruppen. Die weiteren Pitches innerhalb eines Basispitch weisen unterschiedliche Umfangslängen auf, wobei das Verhältnis der Länge des kürzesten weiteren Pitch zur Länge des längsten weiteren Pitch 1:1,2 bis 1:1,6 beträgt. Bei einem Reifen mit einem derartigen Laufstreifen erfolgt daher eine im Umfangsbereich zusätzliche Unterteilung in Pitches. Dabei werden die Basispitches möglichst optimal über den Reifenumfang angeordnet, die weiteren Pitches werden anschließend "dazu" optimiert, um derart den Laufstreifen geräuschmäßig besonders vorteilhaft auszuführen und gleichzeitig auch andere Reifeneigenschaften, beispielsweise einen gleichmäßigen Abrieb, zu erzielen.

Aus der EP 2 463 123 B1 ist ein Fahrzeugreifen bekannt, bei welchem ebenfalls durch Schrägrillen und den dazwischen befindlichen Profilpositiven Pitches unterschiedlicher Umfangslängen gebildet sind. Dabei verläuft in jedem Pitch die in der einen Laufstreifenhälfte verlaufenden Schrägrillen innerhalb des Pitches entlang der einen Pitchgrenze und die in der anderen Laufstreifenhälfte verlaufende Schrägrille innerhalb eines Pitch entlang der anderen Pitchgrenze. Die beiden zu einem Pitch gehörenden Schrägrillenteile weisen übereinstimmende Breiten auf und verlaufen unter gleich großen Winkeln zum Reifenäquator. Durch diese Maßnahmen wird durch ein in Umfangsrichtung erfolgendes Versetzen von Schrägrillen ein bezüglich des Reifenäquators spiegelsymmetrisch versetztes Laufstreifenprofil mit Pitches unterschiedlicher Umfangslängen geschaffen, wobei in jedem Pitch einer bestimmten Umfangslänge in den beiden Laufstreifenhälften die Positiv- und Negativflächen übereinstimmen. Diese Maßnahmen sollen eine besonders geräuscharme Ausführung von Laufstreifenprofilen und gleichzeitig ein gutes Wasserdrainagevermögen sicherstellen.

Bei den bekannten, mit direktionalen also laufrichtungsgebunden gestalteten Laufstreifenprofilen mit V-förmig über die Laufstreifenbreite verlaufenden Schrägrillen ist es daher üblich, über die Laufstreifenbreite verlaufende Pitches, bedingt durch den V-Verlauf der Schrägrillen, vorzusehen. Der Anordnung und Ausgestaltung der Pitches über den Reifenumfang sind daher auch gewisse Grenzen gesetzt.

Der Erfindung liegt die Aufgabe zugrunde, bei einem Fahrzeugreifen der eingangs genannten Art eine weitere Möglichkeit aufzufinden, das Abrollgeräusch, also das Reifen-/Fahrbahngeräusch, zu beeinflussen, um die auftretenden Frequenzen auf ein breiteres Spektrum zu verteilen, die zugehörigen Amplituden zu senken und das subjektiv wahrgenommene Geräusch deutlich zu reduzieren.

Gelöst wird die gestellte Aufgabe erfindungsgemäß dadurch, dass im Laufstreifen Kombinationspitches vorhanden sind, welche jeweils zumindest zwei in Umfangsrichtung aufeinander folgende Pitches enthalten, wobei sich jedes Pitch, über die Laufstreifenbreite betrachtet, aus einer Kombination aus einem ersten und einem zweiten Pitchteil mit unterschiedlichen Umfangslängen zusammensetzt, wobei jedes Pitch Pitchteile enthält, die sich entweder von der Kombination der Pitchteile in jedem weiteren Pitch des Kombinationspitches unterscheiden oder derart angeordnet sind, dass in Umfangsrichtung aufeinanderfolgende Pitchteile voneinander unterschiedlich sind.

Die Erfindung schafft eine neuartige Kombination der Aufeinanderfolge von Pitchteilen innerhalb von Kombinationspitches. Eine Pitchabfolge bestehend aus derartigen Kombinationspitches und aus herkömmlichen Pitches kann in unterschiedlichsten Variationen rechnerisch ermittelt und daher hinsichtlich des Reifen-/Fahrbahngeräusches, der dabei auftretenden Frequenzen und Amplituden besonders vorteilhaft optimiert werden.

Bei einer bevorzugten Ausführung sind im Laufstreifen Kombinationspitches vorhanden, welche jeweils genau zwei in Umfangsrichtung aufeinanderfolgende Pitches enthalten. Mit derartigen Kombinationspitches lässt sich gemeinsam mit herkömmlichen Pitches ein bezüglich des Reifen-/Fahrbahngeräusches und hinsichtlich eines gleichmäßigen Abriebs besonders ausgewogenes Laufstreifenprofil gestalten. Grundsätzlich auch Varianten möglich, bei welchen im Laufstreifen Kombinationspitches vorhanden sind, die drei in Umfangsrichtung aufeinanderfolgende Pitches enthalten.

Bevorzugt sind ferner Ausführungsvarianten, bei welchen im Laufstreifen Kombinationspitches vorhanden sind, welche Pitchteile mit drei unterschiedlichen Umfangslängen enthalten. Derartige Kombinationspitches lassen sich zu einem geräuschoptimierten Laustreifen vor allem gemeinsam mit "herkömmlich" gestalteten Pitches mit ebenfalls drei unterschiedlichen Umfangslängen kombinieren.

Bei weiteren Ausführungsvarianten sind im Laufstreifen Kombinationspitches vorhanden, welche Pitchteile mit zwei unterschiedlichen Umfangslängen oder mehr als drei unterschiedliche Umfangslängen, beispielsweise bis zu fünf unterschiedlichen Umfangslängen, enthalten. Solche Kombinationspitches werden bevorzugt mit herkömmlich gestalteten Pitches kombiniert, die gleichermaßen unterschiedliche Umfangslängen, also beispielsweise fünf, aufweisen.

Insbesondere in Abhängigkeit von den tatsächlichen Umfangslängen bzw. den Umfangslängenverhältnissen der Pitches bzw. Pitchteile kann es für ein günstiges Reifen-/Fahrbahngeräusch von Vorteil sein, wenn im Laufstreifen Kombinationspitches vorhanden sind, bei welchen gleiche Pitchteile in Umfangsrichtung aufeinanderfolgen oder welche sich aus Pitches zusammensetzen, bei welchen ausschließlich Pitchteile verschiedener Umfangslängen in Umfangsrichtung aufeinanderfolgen.

Bei einer weiteren bevorzugen Ausführungsvariante ist vorgesehen, dass in Kombinationspitches zumindest ein Pitchteil, bevorzugt ein Pitchteil mit der größten Umfangslänge, insbesondere mittig mit einer zusätzlichen parallel zu den Schrägrillen verlaufenden Querrille versehen ist. Zusätzliche Querrillen verbessern vor allem die Griffeigenschaften und/oder die Nässeperformance des Laufstreifens.

Weitere Merkmale, Vorteile und Einzelheiten der Erfindung werden nun anhand der schematischen Zeichnung, die ein Beispiel aus dem Stand der Technik sowie Ausführungsbeispiele der Erfindung schematisch darstellt, näher beschrieben. Dabei zeigen
Fig. 1 eine Ansicht von drei aufeinanderfolgenden Pitches eines Laufstreifenprofils eines Fahrzeugreifens gemäß dem Stand der Technik,
Fig. 2 bis Fig. 6 Ausführungsbeispiele von Kombinationspitches gemäß der Erfindung und
Fig. 7 und Fig. 8 jeweils einen Umfangsabschnitt eines Laufstreifens mit einer Pitchabfolge, die in Kombination herkömmliche Pitches und Kombinationspitches gemäß der Erfindung enthält.

Fahrzeugreifen gemäß der Erfindung sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart. PKW-, Van- und SUV-Reifen sind insbesondere für Felgen mit einem ganzzahligen Felgendurchmesser von 13 Zoll bis 24 Zoll, bevorzugt von 18 Zoll bis 23 Zoll, vorgesehen und weisen einen Traglastindex von insbesondere 71 bis 126 auf.

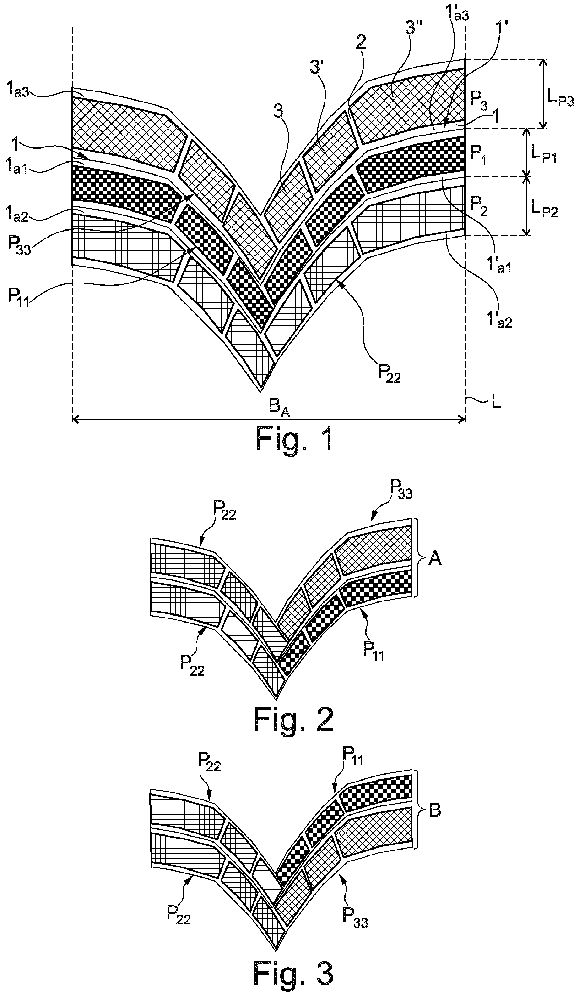

Fig. 1 zeigt eine vereinfachte Darstellung eines drei Pitches unterschiedlicher Umfangslängen umfassenden Umfangsabschnittes eines Laufstreifens eines Fahrzeugreifens als Abwicklung in die Ebene. Mit L sind die beiden seitlichen Ränder der Bodenaufstandsfläche des Laufstreifens bezeichnet. Die Bodenaufstandsfläche entspricht dem statisch ermitteln Footprint, welcher mit einem auf einer Normfelge montierten Reifen bei einer Last bei 70 % der maximalen Tragfähigkeit, einem Innendruck von 85 % des Normdrucks gemäß E.T.R.T.O Standards in der jeweils geltenden Fassung ermittelt ist. Die Breite B_{A} der Bodenaufstandsfläche ist daher der in axialer Richtung ermittelte größte Abstand zwischen den beiden seitlichen Rändern L der Bodenaufstandsfläche.

Der Laufstreifen weist eine laufrichtungsgebunden gestaltete Profilierung mit breitenübergreifend, daher über die Breite des Laufstreifens zueinander V-förmig und verlaufenden Schrägrillen 1, 1' auf, welche paarweise zusammengehörend Hauptrillen des Laufstreifens sind. Beim Ausführungsbeispiel münden die Schrägrillen 1, 1' im Bereich der Mittelumfangslinie M-M des Laufstreifens ineinander. Die Schrägrillen 1,1' verlaufen zur Umfangsrichtung des Laufstreifens unter spitzen Winkeln von 30° bis 85°, wobei der Winkel bei der Mittelumfangslinie M-M des Laufstreifens am kleinsten ist und in Richtung zu den Laufstreifenrändern größer wird. Derartige Verläufe von Schrägrillen 1, 1' sind üblich und an sich bekannt. Beim gezeigten Ausführungsbeispiel gliedern in jeder Laufstreifenhälfte jeweils zwei weitere zusätzliche Rillen 2, die in Umfangsrichtung aufeinanderfolgenden Schrägrillen 1, 1' verbinden und sich unter einem spitzen Winkel von 10° bis 30° zur Umfangsrichtung erstrecken, die Profilpositive zwischen zwei in Umfangsrichtung aufeinanderfolgenden Schrägrillen 1, 1' jeweils in drei Profilblöcke 3, 3'und 3".

Um ein möglichst unauffälliges Abrollgeräusch von Laufstreifen zu erzielen, ist es üblich, die Profilierung von Laufstreifen in Pitches zu gliedern, wobei der Abschnitt des Laufstreifens gemäß Fig. 1 beispielhaft drei Pitches P₁, P₂ und P₃ mit unterschiedlichen Umfangslängen L_{P1}, L_{P2} und L_{P3}, die an den Rändern L vorliegen bzw. dort ermittelt sind, aufweist, wobei L_{P1} < L_{P2} < L_{P3} gilt. Zur besseren optischen Unterscheidung der Pitches P₁, P₂ und P₃ sind die Pitches P1, P₂ und P₃ mit unterschiedlichen Oberflächenstrukturen versehen. Jedes Pitch P₁, P₂ und P₃ setzt sich über die Laufstreifenbreite jeweils aus zwei Pitchteilen P₁₁, P₂₂, und P₃₃ zusammen, welche jeweils aus den zwischen den in Umfangsrichtung aufeinanderfolgenden Schrägrillen 1 bzw. 1' befindlichen Profilpositiven und jeweils einem Rillenteil 1ₐ₁, 1'ₐ₁, 1ₐ₂,1'ₐ₂, 1ₐ₃,1'ₐ₃ der an die Profilpositive anschließenden Schrägrillen 1, 1' bestehen. Jede Schrägrille 1, 1' setzt sich daher aus zwei Rillenteilen zusammen, die Schrägrillen 1, 1' zwischen den beiden untersten Pitches P₂ und P₁ aus je einem Rillenteil 1ₐ₂, 1'ₐ₂ des Pitch P₂ und je einem Rillenteil 1ₐ₁, 1'ₐ₂ des anschließenden Pitch P₂. An den Laufstreifenrändern L betragen die Umfangslängen dieser beiden Rillenteile 1ₐ₂, 1ₐ₁ und 1'ₐ₂, 1'ₐ₁ gemeinsam 10% bis 17% der Umfanglängen der in Umfangsrichtung aufeinander folgenden Pitches P₂, P₁. Bei einem bestimmten Laufstreifen ist der Prozentanteil der Rillenteile bei allen Pitches P₁, P₂ und P₃ konstant, beispielsweise 12%.

Wie üblich werden in einem Laufstreifen diese Pitches P₁, P₂ und P₃ über den Reifenumfang gemäß einer Pitchabfolge angeordnet, die rechnerisch ermittelt wird, wobei die Gesamtanzahl sämtlicher Pitches über den Reifenumfang bei einem Reifen für Personenkraftwagen in der Größenordnung von 60 bis 90 beträgt. In einer Pitchabfolge können an manchen Stellen des Reifenumfangs zwei oder mehr Pitches gleicher Länge aufeinanderfolgen.

Fig. 2 bis Fig. 6 zeigen Ausführungsbeispiele gemäß der Erfindung, wobei die Pitchteile P₁₁, P₂₂, und P₃₃ der Pitches P₁, P₂ und P₃ aus Fig. 1 zu Kombinationspitches A, B, C, D, E zusammengefasst sind, welche sich jeweils aus zwei in Umfangsrichtung aufeinanderfolgenden und jeweils über die Laufstreifenbreite, also breitenübergreifend, verlaufenden Pitches zusammensetzen. Dabei ist die oben erwähnte und aus optischen Gründen gewählte Struktur der Oberflächen der Pitchteile P₁₁, P₂₂, und P₃₃ beibehalten worden.

Beim Kombinationspitch A gemäß Fig. 2 setzt sich das untere Pitch aus einem ersten, in Fig. 2 links positionierten Pitchteil P₂₂ und einem zweiten, in Fig. 2 rechts positionierten Pitchteil P₁₁ zusammen. Das in Fig. 2 obere Pitch setzt sich aus einem ersten, in Fig. 2 links positionierten Pitchteil P₂₂ und einem zweiten, in Fig. 2 rechts positionierten Pitchteil P₃₃, zusammen.

Beim Kombinationspitch B gemäß Fig. 3 setzt sich das in Fig. 3 untere Pitch aus einem ersten, in Fig. 3 links positionierten Pitchteil P₂₂, und einem zweiten, in Fig. 3 rechts positionierten Pitchteil P₃₃ zusammen. Das in Fig. 3 obere Pitch setzt sich aus einem ersten, in Fig. 3 links positionierten Pitchteil P₂₂ und einem zweiten, in Fig. 2 rechts positionierten Pitchteil P₁₁ zusammen.

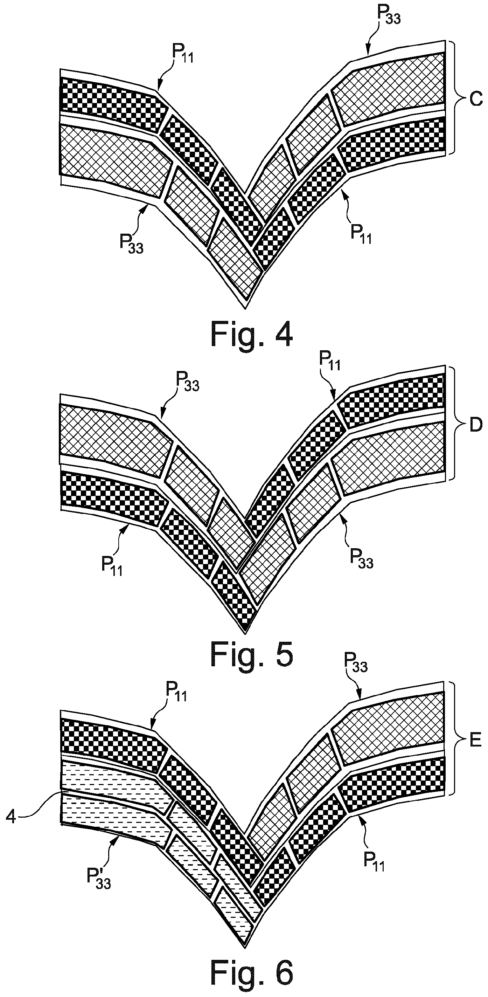

Fig. 4 zeigt ein Kombinationspitch C mit einem unteren Pitch aus einem ersten, in Fig. 4 links positionierten Pitchteil P₃₃ und einem zweiten, in Fig. 4 rechts positionierten Pitchteil P₁₁. Das in Fig. 4 obere Pitch setzt sich aus einem ersten, in Fig. 4 links positionierten Pitchteil P₁₁ und einem zweiten, in Fig. 4 rechts positionierten Pitchteil P₃₃ zusammen,

Fig. 5 zeigt ein Kombinationspitch D mit einem unteren Pitch aus einem ersten, in Fig. 5 links positionierten Pitchteil P₁₁ und einem zweiten, in Fig. 5 rechts positionierten Pitchteil P₃₃. Das in Fig. 5 obere Pitch setzt sich aus einem ersten, in Fig. 5 links positionierten Pitchteil P₃₃ und einem zweiten, in Fig. 5 rechts positionierten Pitchteil P₁₁ zusammen.

Die in Fig. 4 und 5 gezeigten Ausführungsformen unterscheiden sich von jenen gemäß Fig. 2 und 3 dadurch, dass die Anordnung der Pitchteile in der rechten Laufstreifenhälfte (Fig. 4) und in der linken Laufstreifenhälfte (Fig. 5) vertauscht ist.

Bei dem in Fig. 6 gezeigten Kombinationspitch E setzt sich das untere Pitch aus einem ersten, in Fig. 6 links positionierten durch eine zusätzliche Querrille 4 mittig geteilten Pitchteil P₃₃' und einem zweiten, in Fig. 6 rechts positionierten Pitchteil P₁₁ zusammen. Das in Fig. 6 obere Pitch setzt sich aus einem ersten, in Fig. 6 links positionierten Pitchteil P₁₁ und einem zweiten, in Fig. 6 rechts positionierten Pitchteil P₃₃ zusammen.

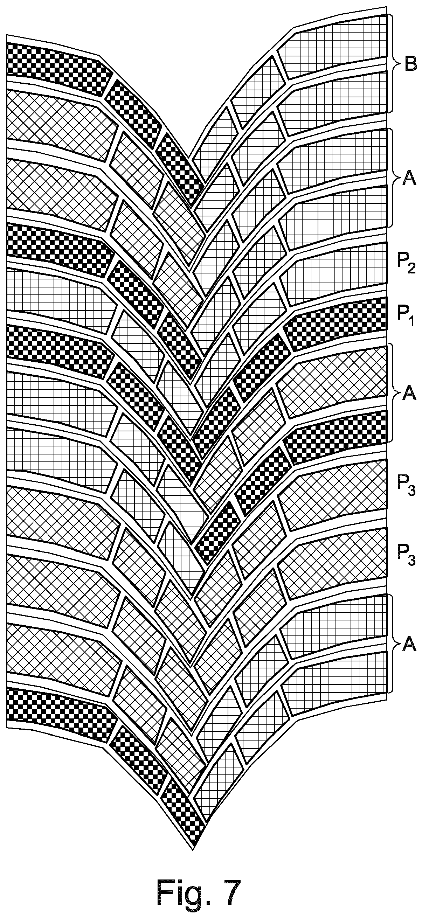

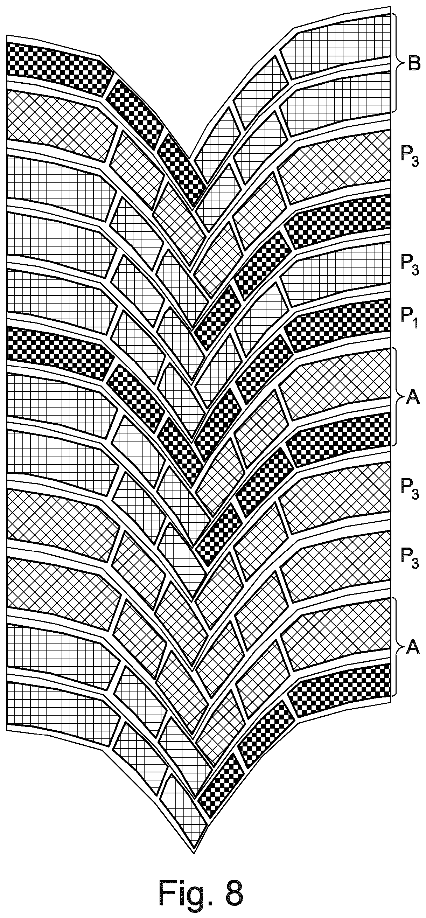

Fig. 7 und Fig. 8 zeigen jeweils einen Umfangsabschnitt eines Laufstreifens mit Abschnitten einer Pitchfolge aus Kombinationspitches A und B und Pitches P₁ bis P₃, wobei am rechten Laufstreifenrand die Kombinationspitches entsprechend mit A und B bezeichnet sind, die sonstigen Pitches mit P₁, P₂ und P₃. Kombinationspitches A und B, bei welchen die in Fig. 2 und Fig. 3 gezeigte Aufeinanderfolge und/oder die Anordnung der Pitchteile "links -rechts" lediglich vertauscht sind, sind ebenfalls mit A und B bezeichnet.

Bei einer alternativen Ausführung bestehen Kombinationspitches aus Pitchteilen von zwei Pitches unterschiedlicher Umfangslängen, analog wie beschrieben. Die möglichen Kombinationspitches setzen sich dann nur aus zwei unterschiedlichen Pitchteilen zusammen. Bei einer weiteren nicht dargestellten Ausführung weisen die Pitchteile Doppelblockstrukturen mit zusammenhängenden und/oder separaten, in Umfangsrichtung unmittelbar aufeinanderfolgenden Blöcken auf.

Die Schrägrillen 1, 1' verlaufen bei einer alternativen Ausführung derart, dass die Schrägrillen 1 gegenüber den Schrägrillen 1' in Umfangsrichtung versetzt sind. Bei einer weiteren Ausführung ist der V-Verlauf asymmetrisch, sodass beispielsweise die Schrägrillen 1 deutlich kürzer sind als die Schrägrillen 1'.

### Bezugszeichenliste

- 1, 1': Schrägrille
- 2: Rille
- 3, 3': Profilblock
- 4: Querrille
- A bis E: Kombinationspitch
- B_{A}: Breite (Bodenaufstandsfläche)
- L: Laufstreifenrand
- P₁, P₂, P₃: Pitch
- P₁₁, P₂₂, P₃₃: Pitchteil
- P₃₃': Pitchteil
- L_{P1}, L_{P2,} L_{P3}: Umfangslänge
- 1ₐ₁, 1ₐ₂, 1ₐ₃: Rillenteil
- 1'ₐ₁, 1'ₐ₂, 1'ₐ₃: Rillenteil
- M-M: Mittelumfangslinie

## Patentansprüche

1. Fahrzeugreifen mit einem profilierten, laufrichtungsgebunden gestalteten Laufstreifen mit über die Laufstreifenbreite zueinander V-förmig verlaufenden ersten und zweiten Schrägrillen (1, 1') und mit Profilpositiven zwischen in Umfangsrichtung aufeinanderfolgenden ersten und zweiten Schrägrillen (1, 1'), welche jeweils mit den zwischen ihnen befindlichen Profilpositiven über die Laufstreifenbreite verlaufende Pitches bilden, die jeweils aus einem ersten den ersten Schrägrillen (1) zugeordneten Pitchteil (P₁₁, P₂₂, P₃₃) und einem zweiten den zweiten Schrägrillen (1') zugeordneten Pitchteil (P₁₁, P₂₂, P₃₃) bestehen, wobei die Pitchteile (P₁₁, P₂₂, P₃₃) in mindestens zwei unterschiedlichen, an den seitlichen Rändern (L) der Bodenaufstandsfläche des Laufstreifens vorliegenden Umfangslängen vorgesehen sind, und wobei die Pitches über den Umfang des Laufstreifen gemäß einer Pitchabfolge aufeinander folgen,
**dadurch gekennzeichnet,**
**dass** im Laufstreifen Kombinationspitches (A bis E) vorhanden sind, welche jeweils zumindest zwei in Umfangsrichtung aufeinander folgende Pitches enthalten, wobei sich jedes Pitch, über die Laufstreifenbreite betrachtet, aus einer Kombination aus einem ersten und einem zweiten Pitchteil (P₁₁, P₂₂, P₃₃) mit unterschiedlichen Umfangslängen zusammensetzt, wobei jedes Pitch Pitchteile (P₁₁, P₂₂, P₃₃) enthält, die sich entweder von der Kombination der Pitchteile (P₁₁, P₂₂, P₃₃) in jedem weiteren Pitch des Kombinationspitches (A bis E) unterscheiden oder
derart angeordnet sind, dass in Umfangsrichtung aufeinanderfolgende Pitchteile (P₁₁, P₂₂, P₃₃) voneinander unterschiedlich sind.

2. Fahrzeugreifen nach Anspruch 1, **dadurch gekennzeichnet, dass** im Laufstreifen Kombinationspitches (A bis E) vorhanden sind, welche jeweils genau zwei in Umfangsrichtung aufeinander folgende Pitches enthalten.

3. Fahrzeugreifen nach Anspruch 1 oder 2, **dadurch gekennzeichnet, dass** im Laufstreifen Kombinationspitches (A bis E) vorhanden sind, welche Pitchteile (P₁₁, P₂₂, P₃₃) mit drei unterschiedlichen Umfangslängen enthalten.

4. Fahrzeugreifen nach einem der Ansprüche 1 bis 3, **dadurch gekennzeichnet, dass** im Laufstreifen Kombinationspitches (A, B) vorhanden sind, welche Pitches enthalten, bei welchen gleiche Pitchteile (P₂₂) in Umfangsrichtung aufeinander folgen.

5. Fahrzeugreifen nach einem der Ansprüche 1 bis 4, **dadurch gekennzeichnet, dass** im Laufstreifen Kombinationspitches (C, D, E) vorhanden sind, welche sich aus Pitches zusammensetzen, bei welchen ausschließlich verschiedene Pitchteile (P₁₁, P₂₂, P₃₃) in Umfangsrichtung aufeinander folgen.

6. Fahrzeugreifen nach einem der Ansprüche 1 bis 5, **dadurch gekennzeichnet, dass** im Laufstreifen Kombinationspitches (E) vorhanden sind, in welchen zumindest ein Pitchteil (P₃₃'), vorzugsweise ein Pitchteil (P₃₃') mit der größten Umfangslänge, mit einer zusätzlichen, insbesondere parallel zu den Schrägrillen (1, 1') verlaufenden Querrille (4) versehen ist.
